Europäisches Patentamt

(19) European Patent Office

Office européen des brevets

(11) Numéro de publication: **0 299 809**
**A1**

(12) **DEMANDE DE BREVET EUROPEEN**

(21) Numéro de dépôt: 88400866.5

(22) Date de dépôt: 12.04.88

(51) Int. Cl.⁴: **B 62 L 1/14**

(30) Priorité: 09.06.87 FR 8707978

(43) Date de publication de la demande:
18.01.89 Bulletin 89/03

(84) Etats contractants désignés:
AT BE CH DE ES FR GB GR IT LI LU NL SE

(71) Demandeur: M.B.K. Industrie Société Nouvelle
Motobécane Société Anonyme Française
Zone Industrielle de Rouvroy
F-02322 Saint Quentin (FR)

(72) Inventeur: Rakover, Jean-Jacques
3, rue André Mathias Morcourt
F-02322 Saint Quentin (FR)

(74) Mandataire: Wind, Jacques et al
Cabinet Germain et Maureau Conseils en Propriété
Industrielle 64, rue d'Amsterdam
F-75009 Paris (FR)

(54) **Dispositif de sécurité pour frein de véhicule à deux roues.**

(57) Dispositif destiné, sur un frein à patins (5) dont les leviers de support (7) sont liés par un câble (9) ou par un ressort, à empêcher un endommagement de la roue (2) avec arrêt brutal si le câble de tirage central (11) vient à se rompre.

Il comporte une butée d'arrêt (13) qui est fixée sur la tête de fourche (12) et qui passe sous le câble de liaison (9).

FIG.1

EP 0 299 809 A1

## Description

**"Dispositif de sécurité pour frein de véhicule à deux roues."**

La présente invention se rapporte à un dispositif de sécurité pour frein de cycle à tirage central.

Un frein de cycle à tirage central comporte généralement, du moins dans sa version actuelle, deux patins de frottement portés par deux leviers qui, articulés sur les deux branches de la fourche, sont reliés par un organe de liaison. Cet organe de liaison, qui est en général constitué par un câble, est relié librement à un palonnier auquel est fixé le câble de traction du frein. Les deux leviers précités sont soumis à l'action de ressorts tendant à les faire pivoter en sens inverse de celui du freinage.

Ce type de frein est utilisé notamment sur les cycles dits "de montagne", ou "mountain-bike", en raison de leur robustesse, de leur simplicité, de leur relativement faible poids, et de leur efficacité due à la parfaite symétrie de l'action des deux patins de frein sur les deux côtés de la jante de roue.

En cas de rupture accidentelle du câble de traction, on court le risque que les deux leviers précités viennent, sous l'action des ressorts, s'engager entre les rayons de la roue, entraînant la chute du cycliste et l'endommagement de cette roue. S'agissant d'un cycle de montagne dont le pneumatique est normalement équipé de protubérances appelées "crampons", il existe en outre, dans un tel cas de rupture, un risque de chute du câble de liaison et du palonnier précités sur la roue, avec accrochage dans les superstructures du pneumatique, ce qui provoquerait la chute du cycliste et l'endommagement de ce pneumatique. L'invention vise à remédier à ces inconvénients. A cet effet, il est prévu une tige sensiblement horizontale qui est fixée sur le cadre du cycle, est située en dessous du palonnier, est dirigée vers l'avant s'il s'agit de la roue avant ou vers l'arrière s'il s'agit de la roue arrière, et s'étend au delà du palonnier.

S'agissant d'un dispositif de freinage pour lequel l'organe de liaison est constitué par un câble qui, reliant le palonnier aux deux leviers porteurs de patins, délimite un V renversé, l'extrémité libre de la tige précitée est recourbée vers le haut, et cette tige passe librement au travers du V renversé, de telle sorte qu'en cas de rupture du câble de traction, le palonnier et le cable de liaison sont amenés à prendre appui sur le berceau formé par la tige et son extrémité recourbée, arrêtant ainsi à la fois le mouvement de déplacement des deux leviers en direction de la roue et le mouvement de chute du palonnier et du câble de liaison en direction de cette roue.

L'invention sera bien comprise et ses avantages et autres caractéristiques ressortiront, au cours de la description suivante d'un exemple non limitatif de réalisation, en référence aux dessins schématiques annexés dans lesquels:

Figure 1 est une vue partielle en perspective d'un dispositif de freinage sur roue avant de bicyclette, équipé de ce dispositif de sécurité;

Figure 2 est une vue de face de ce dispositif de freinage,

Figure 3 est une vue similaire à la figure 2 montrant l'effet de ce dispositif de sécurité.

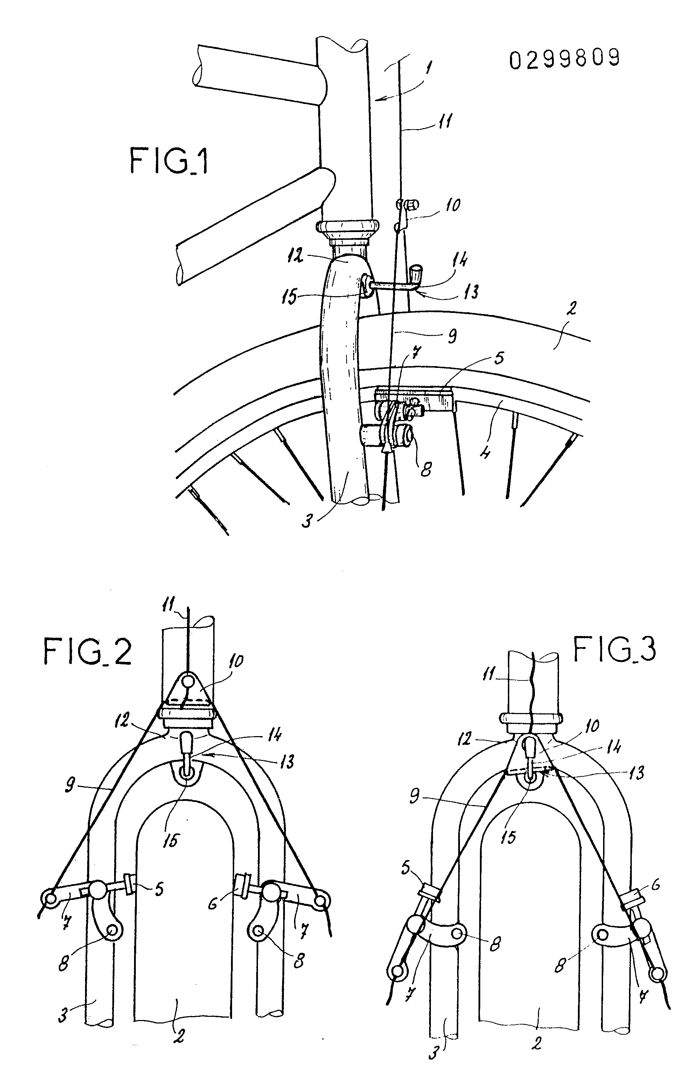

En se reportant aux figures 1 et 2, une bicyclette 1 a sa roue avant 2 maintenue dans une fourche 3. Le freinage de la roue 2 est assuré classiquement par frottement sur sa jante 4, et de part et d'autre de celle-ci, de deux patins de frein 5 et 6. Ces patins de frein sont portés par des leviers 7, qui sont articulés chacun autour d'un axe horizontal 8 fixé sur la fourche 3.

Les deux leviers 7 sont reliés par un câble 9 qui est maintenu par un palonnier 10, lui-même fixé à l'extrémité du câble 11 de tirage central relié à la poignée de frein. L'ensemble de traction 9,10,11 maintient chaque levier 7 en position haute (figure 2), contre la force d un ressort (non apparent sur le dessin), solidaire de l'axe 8 et tendant à le ramener vers le bas. En cas de rupture accidentelle du câble 11, plus rien ne vient contrecarrer l'action de ces deux ressorts, de sorte que les leviers 7 tournent autour de leurs axes 8 respectifs jusqu'à pouvoir venir se loger entre les rayons de la roue 2. En outre, l'ensemble constitué par le palonnier 10 et le cable de liaison 9 tombe sur la roue 2. Si celle-ci est équipée, comme c'est par exemple le cas pour les cycles dits "de montagne", d'un pneumatique à crampons, cet ensemble vient s'accrocher dans les superstructures de ce pneumatique.

Afin d'éviter ces risques, la bicyclette 1 est pourvue d'une tige 13 sensiblement horizontale qui est fixée sur la tête de fourche 12 par un dispositif 15 à vis et écrou. L'extrémité avant 14 de la tige 13 est recourbée vers le haut, et cette tige passe librement au travers du V renversé formé par le câble de liaison 9. Elle est donc située en dessous du palonnier 10, dirigée vers l'avant, et elle s'étend au delà de ce palonnier.

Si, comme représenté figure 3, le câble central de traction 11 vient accidentellement à se rompre, le palonnier 10 et le câble de liaison 9 sont amenés à prendre appui sur le berceau formé par la tige 13 et son extrémité recourbée 14, arrêtant ainsi à la fois le mouvement de déplacement des deux leviers 7 en direction de la roue et le mouvement de chute du palonnier 10 et du câble de liaison 9 en direction de cette roue 2. Le câble de liaison 9 reste tendu, et il contrecarre toujours la force des ressorts associés aux deux leviers 7, qui restent alors dans la position stable intermédiaire dessinée en figure 3.

L'invention n'est bien entendu pas limitée à l'exemple de réalisation qui vient d'être décrit. La butée 13 pourrait par exemple avoir une autre forme, légèrement courbe et relevée vers le haut, et elle pourrait être fixée sur une entretoise proche de la tête de fourche 12. Une butée du même type pourrait être placée au niveau de la roue et du frein arrière du cycle. Elle serait alors fixée sur l'entretoise des haubans arrière qui fait, comme la tête de fourche précitée 12, partie du cadre du cycle (il s'agit en l'espèce des deux tubes qui relient les pattes de fixation de la roue arrière aux noeuds de selle), et elle serait bien évidemment dirigée vers l'arrière.

## Revendications

1. Dispositif de sécurité pour frein de cycle, le frein comportant deux patins de frottement (5) portés par deux leviers (7) qui, articulés sur les deux branches de la fourche (3), sont reliés par un organe (9) lui-même librement relié à un palonnier (10) auquel est fixé le câble de traction (11), les deux leviers (7) étant soumis à l'action de ressorts tendant à les faire pivoter en sens inverse de celui du freinage jusqu'à s'engager entre les rayons de la roue en cas de rupture accidentelle du câble de traction (11), en même temps que l'organe de liaison (9) tombe sur le pneumatique de la roue (2), pouvant ainsi entraîner un blocage de cette roue, caractérisé en ce que sur le cadre (12) est fixée une tige sensiblement horizontale (13) qui est située en-dessous du palonnier (10), est dirigée vers l'avant s'il s'agit de la roue avant (2) ou vers l'arrière s'il s'agit de la roue arrière, et s'étend au delà du palonnier.

2. Dispositif de sécurité selon la revendication 1, caractérisé en ce que l'organe de liaison (9) est constitué par un câble qui, reliant le palonnier (10) aux deux leviers (7) porteurs des patins (5), délimite un V renversé, et en ce que l'extrémité libre de la tige (13) est recourbée vers le haut, et cette tige passe librement au travers du V renversé précité, de telle sorte qu'en cas de rupture du câble de traction (11), le palonnier (10) et le câble de liaison (9) sont amenés à prendre appui sur le berceau formé par la tige (13) et son extrémité (14), arrêtant ainsi à la fois le mouvement de déplacement des deux leviers (7) en direction de la roue (2) et le mouvement de chute du palonnier (10) et du câble de liaison (9) en direction de cette roue.

0299809

FIG_1

FIG_2

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 665 458 (SOMVILLE)<br>* Page 1, lignes 46-75; figures 1,2 *<br>--- | 1,2 | B 62 L    1/14 |
| A | CH-A- 283 293 (JEANTHON)<br>* Page 1, ligne 43 - page 2, ligne 24; figures 1,2 *<br>--- | | |
| A | FR-A-2 327 917 (YOSHIGAI)<br>----- | | |

**DOMAINES TECHNIQUES RECHERCHES (Int. Cl.4)**

B 62 L    1/00

Le présent rapport a été établi pour toutes les revendications

| Lieu de la recherche | Date d'achèvement de la recherche | Examinateur |
|---|---|---|
| LA HAYE | 12-10-1988 | HARTEVELD C.D.H. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dèpôt ou après cette date
D : cité dans la demande
L : cité pour d'autres raisons
.........................................................................................................
& : membre de la même famille, document correspondant

EPO FORM 1503 03.82 (P0402)